# EUROPÄISCHE PATENTANMELDUNG

(11) **EP 2 703 060 A1**
(43) Veröffentlichungstag der Anmeldung: **05.03.2014**
(21) Anmeldenummer: 12006074.4
(22) Anmeldetag: 27.08.2012
(51) Int. Cl.: B01D 46/02, B01D 46/00, B01D 46/44

(54) **Filtervorrichtung zur Abscheidung von Feststoffpartikeln aus einem mit den Feststoffpartikeln beladenen Gas**

(71) Anmelder: Hitachi Zosen Inova AG, 8005 Zürich (CH)
(72) Erfinder: Koller, Felix, 5107 Schinznach-Dorf (CH)
(74) Vertreter: Schaad, Balass, Menzl & Partner AG

(57) **Zusammenfassung**

Die vorliegende Erfindung betrifft eine Filtervorrichtung zur Abscheidung von Feststoffpartikeln aus einem mit den Feststoffpartikeln beladenen Gas umfassend ein einen Filtervorrichtungsinnenraum (2) umschliessendes Filtervorrichtungsgehäuse (3), eine im Filtervorrichtungsinnenraum (2) angeordnete Lochplatte (4), und eine Vielzahl an Filterelementen (10), von denen jedes einem Loch (16) der Lochplatte (4) zugeordnet ist und die zusammen mit der Lochplatte (4) den Filtervorrichtungsinnenraum (2) in einen Retentatraum (24) und einen Permeatraum (26) unterteilen. Dabei weist jedes Filterelement (10) eine dem Retentatraum (24) zugewandte Aussenfläche (28) und eine dem Permeatraum (26) zugewandte Innenfläche (30) auf und ist dazu bestimmt, vom Gas vom Retentatraum (24) her zum Permeatraum (26) hin durchströmt zu werden, so dass auf der Aussenfläche (28) Feststoffpartikel unter Bildung eines Filterkuchens abgelagert werden. Die Filtervorrichtung ist dadurch gekennzeichnet, dass mindestens einem Teil der Filterelemente (10)
a) ein Gewichtssensor (68) zur Bestimmung des Gewichts des jeweiligen Filterelements (10) oder eines Bereichs davon mit dem darauf abgelagerten Filterkuchen und/oder
b) Mittel (82) zur Bestimmung der nach dem Durchströmen des jeweiligen Filterelements (10) vorliegenden Geschwindigkeit des Gases

## Beschreibung

Die vorliegende Erfindung betrifft eine Filtervorrichtung zur Abscheidung von Feststoffpartikeln aus einem mit den Feststoffpartikeln beladenen Gas gemäss Oberbegriff des Anspruchs 1, sowie ein Verfahren zur Überprüfung eines Filterelements einer solchen Filtervorrichtung. Gemäss einem weiteren Aspekt betrifft die Erfindung die Verwendung besagter Filtervorrichtung bzw. besagten Verfahrens in einer Müllverbrennungsanlage. Zudem betrifft die Erfindung einen Filterschlauch für besagte Filtervorrichtung.

In Müllverbrennungsanlagen wird das bei der Verbrennung freiwerdende, mit Feststoffpartikeln beladene Gas (auch als "Rohgas" bezeichnet) mit Hilfe einer eine Vielzahl an Filterelementen umfassenden Filtervorrichtung gereinigt. Diese Filterelemente liegen in der Regel in Form von Filterschläuchen vor, welche von einer Aussenseite her zu einer Innenseite hin durchströmt werden, wobei an der Aussenseite die abzuscheidenden Feststoffpartikel unter Bildung eines Filterkuchens abgelagert werden.

Dieser Filterkuchen zeigt mit zunehmender Dicke selbst eine hocheffektive Filtrationswirkung. Allerdings geht mit der Bildung des Filterkuchens bzw. der Zunahme von dessen Dicke auch eine Zunahme des Strömungswiderstands einher.

Um zu gewährleisten, dass der Strömungswiderstand auf einem für die Verfahrensführung zulässigen Niveau gehalten wird, müssen die Filterelemente regelmässig abgereinigt werden.

Ein häufig eingesetztes Verfahren zur Abreinigung stellt die sogenannte "Puls-Jet-Abreinigung" dar. Dabei wird das jeweilige Filterelement durch einen intensiven, auf die Innenseite aufgebrachten Druckluftstoss bzw. Druckluftimpuls aufgeblasen, wodurch der auf der Aussenseite abgelagerte Filterkuchen durch Impulsübertragung abgelöst und in der Regel von einem Auffangtrichter aufgefangen und über eine Zellradschleuse ausgetragen wird.

In vorbekannten Verfahren wird die Abreinigung mittels Druckluftimpuls in der Regel dann ausgelöst, wenn die Druckdifferenz über die Filterelemente einen bestimmten Wert übersteigt.

In der DE-A-3718846 wird etwa ein Verfahren zum Entstauben eines staubhaltigen Gases mittels Filterelementen beschrieben, welche in Abhängigkeit einer über die Filterelemente gemessenen Druckdifferenz abgereinigt werden. Um zu gewährleisten, dass die Auslösung der reinigenden Druckimpulse nur in Abhängigkeit von den sich ausbildenden Staubschichten erfolgt, wird gemäss DE 37 18846 zusätzlich zur Druckdifferenz über die Filterelemente auch der Volumenstrom des zu reinigenden Gases bestimmt.

Weitere Verfahren, in denen die Auslösung der Abreinigung in Abhängigkeit der Druckdifferenz über die Filterelemente erfolgt, werden etwa in US-B-5,484,536 und EP-A-1 927 390 beschrieben.

Nach der Auslösung erfolgt die Abreinigung der einzelnen Filterelemente in der Regel nach einem fest definierten Programm, wobei die Abfolge der Druckluftimpulse und die Öffnungszeiten der Druckluftdüsen fest einstellt sind.

Nachteilig an solchen Verfahren ist allerdings, dass einzelne Filterelemente unter Umständen eine Abreinigung erfahren, obschon dies gar nicht nötig wäre. Dies rührt daher, dass die Bestimmung der Druckdifferenz über alle Filterelemente den Eigenschaften einzelner Filterelemente kaum Rechnung trägt. Somit ist denkbar, dass ein bestimmtes Filterelement zwar eine optimale Filtrationswirkung bei einem zulässigen Strömungswiderstand aufweist, aufgrund der ermittelten Druckdifferenz über alle Filterelemente aber trotzdem abgereinigt wird.

Dies wiederum führt einerseits zu einem relativ hohen Verschleiss der Filterelemente. Andererseits wird hinsichtlich der Abreinigung der Filterelemente mittels Druckluftimpulsen mehr Druckluft verbraucht, als für eine optimale Abreinigung eigentlich benötigt würde.

Aufgabe der vorliegenden Erfindung ist es somit, eine Filtervorrichtung zur Verfügung zu stellen, die es erlaubt, die Filterelemente zuverlässig und verschleissarm abzureinigen. Insbesondere soll die Erfindung im Hinblick auf eine Abreinigung mittels Druckgasimpulsen weiter eine Minimierung des Druckgasverbrauchs gewährleisten.

Die erfindungsgemässe Aufgabe wird durch die Filtervorrichtung gemäss Anspruch 1 gelöst. Bevorzugte Ausführungsformen sind in den abhängigen Ansprüchen wiedergegeben.

Die Erfindung betrifft somit eine Filtervorrichtung zur Abscheidung von Feststoffpartikeln aus einem mit den Feststoffpartikeln beladenen Gas. Dabei handelt es sich insbesondere um ein bei einem Verbrennungsvorgang freiwerdendes Gas.

Die Filtervorrichtung umfasst ein einen Filtervorrichtungsinnenraum umschliessendes Filtervorrichtungsgehäuse, eine im Filtervorrichtungsinnenraum angeordnete Lochplatte, und eine Vielzahl an Filterelementen, von denen jedes einem Loch der Lochplatte zugeordnet ist und die zusammen mit der Lochplatte den Filtervorrichtungsinnenraum in einen Retentatraum und einen Permeatraum unterteilen.

Jedes Filterelement weist eine dem Retentatraum zugewandte Aussenfläche und eine dem Permeatraum zugewandte Innenfläche auf und ist dazu bestimmt, vom Gas vom Retentatraum her zum Permeatraum hin durchströmt zu werden, so dass auf der Aussenfläche Feststoffpartikel unter Bildung eines Filterkuchens abgelagert werden.

Der Begriff "Retentatraum" entspricht somit demjenigen Teil des Filtervorrichtungsinnenraums, der in Strömungsrichtung betrachtet stromaufwärts des Filterelements angeordnet ist. In diesem werden die Feststoffpartikel, das "Retentat", zurückgehalten. Der Begriff "Permeatraum" entspricht demjenigen Teil des Filtervorrichtungsinnenraums, der in Strömungsrichtung betrachtet stromabwärts des Filterelements angeordnet ist. In diesen strömt das von den Feststoffpartikeln befreite Reingas, das "Permeat", ein.

Gemäss der vorliegenden Erfindung ist/sind nun mindestens einem Teil der Filterelemente
a) ein Gewichtssensor zur Bestimmung des Gewichts des jeweiligen Filterelements oder eines Bereichs davon mit dem darauf abgelagerten Filterkuchen und/oder
b) Mittel zur Bestimmung der nach dem Durchströmen des jeweiligen Filterelements vorliegenden Geschwindigkeit des Gases
zugeordnet.

Der Begriff "mindestens einem Teil der Filterelemente" bedeutet somit, dass sich die Zuordnung gemäss a) und/oder b) auf jedes einzelne Filterelement, mehrere einzelne Filterelemente oder ein einziges Filterelement beziehen kann.

Aufgrund des Gewichtssensors erlaubt es die vorliegende Erfindung, das Gewicht bzw. die Masse des Filterkuchens auf der Aussenseite eines einzelnen Filterelements bzw. eines Bereichs davon in sehr einfacher Weise zu bestimmen. Die Bestimmung der Masse wiederrum erlaubt Rückschlüsse auf den vom Filterkuchen aufgebauten Strömungswiderstand.

Üblicherweise kommt als Gewichtssensor gemäss a) eine Wägezelle zum Einsatz. Denkbar sind aber auch alle anderen Gewichtssensoren, die der Fachmann, der von der vorliegenden Erfindung Kenntnis erlangt hat, für die Zwecke der Erfindung als geeignet erkennt.

Die alternativ oder zusätzlich dazu vorliegenden Mittel zur Bestimmung der nach dem Durchströmen des jeweiligen Filterelements vorliegenden Geschwindigkeit des Gases erlauben ihrerseits Rückschlüsse auf den Strömungswiderstand.

Üblicherweise kommt als Mittel gemäss b) ein Prandtl- oder Pitotrohr zum Einsatz. Denkbar sind aber auch alle anderen Mittel, die der Fachmann, der von der vorliegenden Erfindung Kenntnis erlangt hat, für die Zwecke der Erfindung als geeignet erkennt.

Erfindungsgemäss wird ermöglicht, nebst dem "globalen" Wert der Druckdifferenz über alle Filterelemente einen "lokalen" Wert über die konkreten Eigenschaften einzelner Filterelemente, insbesondere deren Strömungswiderstand, zu erhalten. Dies wiederum erlaubt es, gezielt nur diejenigen Filterelemente einer Abreinigung zu unterziehen, für die eine solche auch tatsächlich angezeigt ist.

Letztendlich ermöglich die vorliegende Erfindung somit eine äusserst verschleissarme Verfahrensführung, was sich in einer hohen Lebensdauer der Filterelemente niederschlägt. Dadurch, dass ein Druckgasimpuls nur für jene Filterelemente aufgegeben wird, für die eine Abreinigung tatsächlich angezeigt ist, kann im Übrigen der Druckgasverbrauch minimiert werden, was seinerseits zu einer Verfahrensoptimierung beiträgt.

Gemäss einer bevorzugten Ausführungsform weist die Filtervorrichtung sowohl einen Gewichtssensor gemäss a) als auch Mittel gemäss b) auf. Dies erlaubt es, sehr zuverlässige Angaben über den Strömungswiderstand zu erhalten.

Gemäss einer weiteren bevorzugten Ausführungsform weist die Filtervorrichtung zusätzlich Mittel zur Bestimmung der Druckdifferenz über die Filterelemente auf bzw. Mittel zur Bestimmung der Druckdifferenz zwischen Retentatraum und Permeatraum.

In der Regel liegt die Lochplatte im Betrieb in einer im Wesentlichen horizontal verlaufenden und in Strömungsrichtung des Gases betrachtet zwischen einer stromaufwärts gelegenen Rohgaskammer und einer stromabwärts gelegenen Reingaskammer angeordneten Ebene. Dabei ist mindestens ein Teil der Filterelemente in Form eines in die Rohgaskammer hineinragenden Filterschlauches ausgebildet, welcher einen Filterschlauchinnenraum definiert und ein in der Rohgaskammer angeordnetes blindes, d.h. geschlossenes Ende und ein in die Reingaskammer mündendes offenes Ende aufweist.

Bevorzugt ist dabei, dass das jeweilige Filterelement bzw. der jeweilige Filterschlauch mit dem Gewichtssensor mittels Aufhängemitteln verbunden ist, die an einem dem offenen Ende zugewandten Endbereich des Filterschlauchs befestigt sind. Insbesondere bevorzugt ist etwa, dass die Aufhängemittel am in die Rohgaskammer hineinragenden und im Wesentlichen unmittelbar an die Lochplatte angrenzenden Bereich des Filterschlauchs befestigt sind. Die Aufhängemittel können etwa in Form eines Riemens vorliegen, dessen freies Ende als Lasche ausgebildet ist. Die Verbindung mit dem Gewichtssensor kann direkt oder indirekt - etwa über ein entsprechendes Aufhängegestell - bewerkstelligt sein.

Die Aufhängemittel erlauben, den Filterschlauch derart anzuheben, dass im Wesentlichen das gesamte Gewicht des Filterschlauchs auf den Aufhängemitteln lastet und durch den Gewichtssensor erfasst werden kann, wie im Zusammenhang mit den Figuren weiter ausgeführt wird.

Weiter ist bevorzugt, dass die Mittel zur Messung der nach dem Durchströmen des Filterelements vorliegenden Geschwindigkeit des Gases im Filterschlauchinnenraum angeordnet sind. Dies erlaubt es, dass die Gasgeschwindigkeit im Wesentlichen unmittelbar nach dem Durchströmen durch das Filterelement bestimmt wird. Denkbar ist allerdings auch, dass besagte Mittel in der Reingaskammer und somit ausserhalb des Filterschlauchinnenraums angeordnet sind. Dabei sind die Mittel vorzugsweise unmittelbar stromabwärts des Filterschlauchs bzw. dessen offenen Endes angeordnet.

Insbesondere bevorzugt ist, dass die Mittel im Filterschlauchinnenraum relativ zur Höhe des Filterschlauchs (d.h. in dessen axialer Richtung) verschiebbar sind, wodurch Werte an einzelnen Punkten eines einzelnen Filterschlauches erhalten werden können. Dadurch kann die Situation hinsichtlich lokal vorliegender Strömungswiderstände zusätzlich aufgelöst werden, was weiter in die Steuerung der Abreinigung einfliessen kann, etwa indem die Öffnungszeiten der für die Puls-Jet-Abreinigung verwendeten Abreinigungsdüsen entsprechend eingestellt werden.

Da die Filterelemente bevorzugt mittels einer Puls-Jet-Abreinigung abgereinigt werden, umfasst die Filtervorrichtung vorzugsweise zusätzlich eine Abreinigungsdüse. Diese ist im Allgemeinen derart angeordnet, den Druckgasimpulses auf die Innenseite des Filterelements zu beaufschlagen.

Zusätzlich zur beschriebenen Filtervorrichtung betrifft die Erfindung weiter ein Verfahren zur Überprüfung eines Filterelements einer oben beschriebenen Filtervorrichtung, in der das Filterelement vom Gas vom Retentatraum her zum Permeatraum hin durchströmt wird, wobei auf der dem Retentatraum zugewandten Aussenfläche des Filterelementes Feststoffpartikel unter Bildung des Filterkuchens ablagert werden.

Dabei wird erfindungsgemäss für mindestens einen Teil der Filterelemente
a) das Gewicht des jeweiligen Filterelements oder eines Bereichs davon mit dem darauf abgelagerten Filterkuchen bestimmt und/oder
b) die nach dem Durchströmen durch das Filterelement vorliegende Geschwindigkeit des Gases bestimmt.

Der Begriff "für mindestens einen Teil der Filterelemente" bedeutet somit, dass sich die Bestimmung gemäss a) und/oder b) auf jedes einzelne Filterelement, mehrere einzelne Filterelemente oder ein einziges Filterelement beziehen kann.

Hinsichtlich der Bestimmung gemäss a) wird vorzugsweise mindestens das Gewicht desjenigen Bereichs des Filterelements bestimmt, der vom Gas durchströmt wird. Somit wird gewährleistet, dass das Gewicht des gesamten auf dem Filterelement gebildeten Filterkuchens bestimmt wird.

Hinsichtlich der Bestimmung gemäss b) wird vorzugsweise die unmittelbar beim Austritt an der Innenfläche des Filterelements vorliegende Geschwindigkeit des Gases bestimmt. Dadurch wird eine möglichst genaue Ermittlung des Strömungswiderstands über das jeweilige Filterelement ermöglicht.

Für die Bestimmung gemäss b) ist weiter bevorzugt, dass die Geschwindigkeit des Gases an unterschiedlichen Stellen bestimmt wird, konkret etwa mittels einer relativ zur Höhe eines Filterschlauches verschiebbaren Messsonde. Hierdurch kann wiederum der Strömungswiderstand an einzelnen Punkten eines einzelnen Filterelements ermittelt werden.

Weiter ist bevorzugt, dass die Bestimmung des Gewichts gemäss a) und/oder der Geschwindigkeit des Gases gemäss b) kontinuierlich erfolgt, um somit eine lückenlose Datenerfassung über die Zeit und letztendlich eine zeitgenaue Abreinigung zu gewährleisten.

Zudem ist bevorzugt, dass zusätzlich zur Bestimmung gemäss a) und/oder b) die Druckdifferenz zwischen Retentatraum und Permeatraum bestimmt wird.

Die Erfindung betrifft zusätzlich ein Verfahren zur Abreinigung eines Filterelements unter Verwendung des oben beschriebenen Verfahrens umfassend den zusätzlichen Schritt, dass die Filterelemente in Abhängigkeit des gemäss a) bestimmten Gewichts und/oder der gemäss b) bestimmten Geschwindigkeit des Gases abgereinigt werden.

Diesbezüglich ist insbesondere bevorzugt, dass die Abreinigung mittels auf die Innenfläche des Filterelements aufgebrachter Druckgasimpulse erfolgt, also eine Puls-Jet-Abreinigung darstellt, wie oben dargelegt wurde.

Insbesondere kann dabei der Zeitpunkt des Druckgasimpulses, die Öffnungszeit der für das Aufbringen des Druckgasimpulses verwendeten Abreinigungsdüse und/oder der Tankdruck des Druckgases aufgrund des gemäss a) bestimmten Gewichts und/oder der gemäss b) bestimmten Geschwindigkeit des Gases eingestellt werden. Denkbar ist im Übrigen auch eine Einstellung des Durchmessers der Austrittsöffnung der entsprechenden Abreinigungsdüse.

Die Vorteile der Filtervorrichtung bzw. des Verfahrens der vorliegenden Erfindung treten insbesondere bei deren/dessen Verwendung in einer Müllverbrennungsanlage zutage. Gemäss einem weiteren Aspekt betrifft die vorliegende Erfindung daher auch die Verwendung der Filtervorrichtung beziehungsweise des Verfahrens in einer Müllverbrennungsanlage.

Im Weiteren betrifft die Erfindung einen Filterschlauch für eine vorgängig beschriebene Filtervorrichtung. Dieser umfasst einen einem blinden Ende zugewandten distalen Bereich, der dazu bestimmt ist, im Betrieb in der Rohgaskammer angeordnet zu sein, einen dem dem blinden Ende gegenüberliegend angeordneten offenen Ende zugewandten proximalen Bereich, der dazu bestimmt ist, im Betrieb in der Reingaskammer angeordnet zu sein, und einen zwischen dem distalen und dem proximalen Bereich angeordneten Übergangsbereich, der die Lochplatte durchgreift. Der Filterschlauch weist nun Aufhängemittel auf, die an einem dem offenen Ende zugewandten Endbereich des Filterschlauchs befestigt sind. Besonders bevorzugt sind die Aufhängemittel in einer an den Übergangsbereich im Wesentlichen unmittelbar angrenzenden Region des distalen Bereichs befestigt.

Diese Aufhängemittel erlauben es, den Filterschlauch derart anzuheben, dass das gesamte Gewicht des Filterschlauches auf ihnen lastet und vom Gewichtssensor erfasst wird. Sie sind in der Regel in Form eines Riemens ausgestaltet, dessen eine Ende am distalen Bereich des Filterschlauchs befestigt, z.B. angenäht, ist und dessen andere, freie Ende in Form einer Lasche zur direkten oder indirekten Verbindung mit dem Gewichtssensor ausgebildet ist.

Die Erfindung wird anhand der Figuren weiter veranschaulicht. Von diesen zeigt:
- Fig. 1: rein schematisch den Aufbau einer einen Gewichtssensor umfassenden Filtervorrichtung gemäss der vorliegenden Erfindung;
- Fig. 2: den in Fig. 1 gezeigten Ausschnitt X des Filterschlauches der Filtervorrichtung in der Innenansicht mit dem entsprechenden Teil der Lochplatte, der vom Filterschlauch durchgriffen wird;
- Fig. 3: rein schematisch den Aufbau einer weiteren Filtervorrichtung gemäss der vorliegenden Erfindung, welche Mittel zur Messung der Geschwindigkeit des Gases umfasst; und
- Fig. 4: rein schematisch den Aufbau einer weiteren Filtervorrichtung gemäss der vorliegenden Erfindung, welche relativ zum Filterelement verschiebbare Mittel zur Messung der Geschwindigkeit des Gases umfasst.

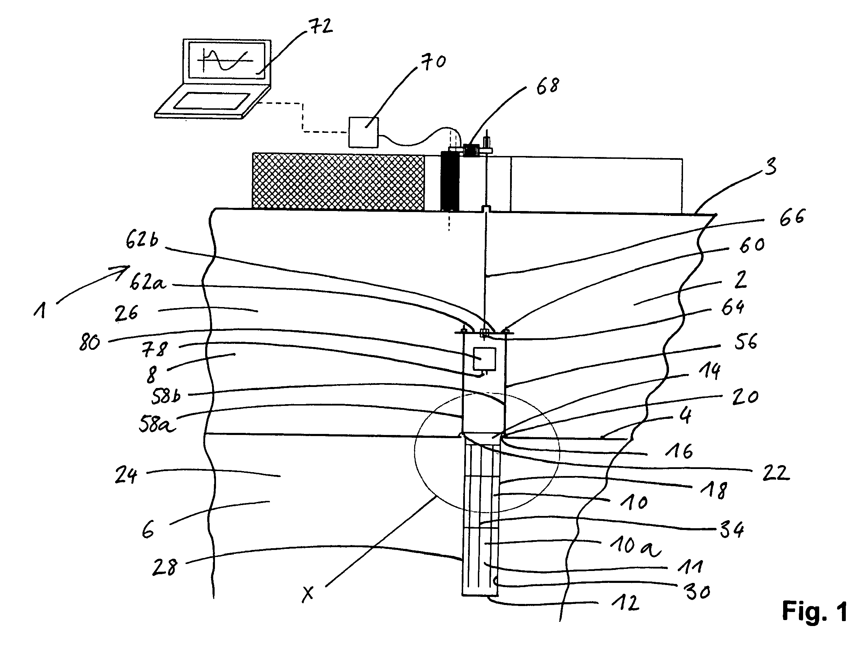

Die in Fig. 1 gezeigte Filtervorrichtung 1 weist ein Filtervorrichtungsgehäuse (3) auf, welches einen Filtervorrichtungsinnenraum 2 umschliesst.

Im Filtervorrichtungsinnenraum 2 ist eine Lochplatte 4 aus gasundurchlässigem Material angeordnet, welche in einer im Wesentlichen horizontal verlaufenden und zwischen einer Rohgaskammer 6 und einer Reingaskammer 8 angeordneten Ebene liegt.

Das Filtervorrichtungsgehäuse 3 weist einen in die Rohgaskammer 6 mündenden Einlass (nicht gezeigt) zur Einführung der mit Feststoffpartikeln beladenen Gase sowie einen aus der Reingaskammer 8 führenden Auslass (nicht gezeigt) zur Ausführung der nach der Filtration erhaltenen Reingase auf.

Die Filtervorrichtung weist zudem eine Vielzahl an Filterelementen 10 auf, von denen in Fig. 1 lediglich eines gezeigt ist. Das Filterelement 10 ist in Form eines im Wesentlichen hohlzylinderförmigen Filterschlauchs 10a mit einem blinden Ende 12 und einem offenen Ende 14 ausgebildet.

Jeder Filterschlauch 10a durchgreift jeweils ein Loch 16 der Lochplatte 4; er umfasst somit einen dem blinden Ende 12 zugewandten und in der Rohgaskammer 6 angeordneten distalen Bereich 18, einen dem offenen Ende 14 zugewandten und in der Reingaskammer 8 angeordneten proximalen Bereich 20 und einen zwischen dem distalen Bereich 18 und dem proximalen Bereich 20 angeordneten und die Lochplatte 4 durchgreifenden Übergangsbereich 22. Auf seiner Innenseite umschliesst der Filterschlauch 10a einen Filterschlauchinnenraum 11.

Zusammen mit der Lochplatte 4 unterteilen die Filterelemente 10 den Filtervorrichtungsinnenraum 2 in einen Retentatraum 24 und einen Permeatraum 26. Dabei weist jedes Filterelement 10 eine dem Retentatraum 24 zugewandte Aussenfläche 28 und eine dem Permeatraum 26 zugewandte Innenfläche 30 auf.

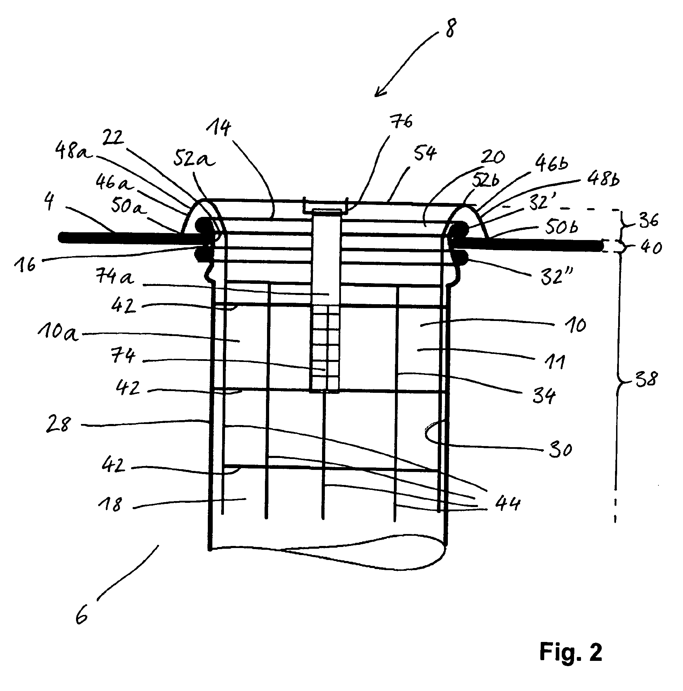

Wie insbesondere aus Fig. 2 hervorgeht, weist das Filterelement 10 bzw. der Filterschlauch 10a in seinem Übergangsbereich 22 zwei umlaufende Dichtringe 32', 32" auf, wovon einer auf der einen Seite und einer auf der anderen Seite der Lochplatte 4 aufliegt.

Zur Stützung des Filterschlauchs 10a ist dieser über einen in die Rohgaskammer 6 eingehängten Filterkorb 34 gestülpt. Der in Fig. 1 gezeigte Filterkorb 34 ist in Form eines Stangengerüsts mit im Wesentlichen kreiszylinderförmigem Grundprofil ausgebildet. In Analogie zum Filterschlauch 10a weist der Filterkorb 34 einen in der Reingaskammer 8 angeordneten proximalen Bereich 36, einen in der Rohgaskammer 6 angeordneten distalen Bereich 38 und einen zwischen proximalem Bereich 36 und distalem Bereich 38 angeordneten Übergangsbereich 40, mit dem der Filterkorb 34 die Lochplatte 4 durchgreift.

Konkret weist das Stangengerüst in Richtung der (Zylinder-)Achse beabstandete, horizontal ausgerichtete Ringstangen 42 und damit fest verbundene vertikal ausgerichtete und in Umlaufrichtung der Ringstangen 42 gleichmässig angeordnete Längsstangen 44 auf.

In der gezeigten Ausführungsform sind vier der Längsstangen 44 als Einhängestangen ausgebildet, wobei in Fig. 1 lediglich zwei Einhängestangen 46a, 46b gezeigt sind. Die Einhängestangen 46a, 46b durchgreifen den Lochboden 4 und sind in ihrem proximalen Endbereich 48a, 48b hakenförmig nach aussen hin gebogen, wobei das proximale Ende 50a, 50b unmittelbar oberhalb der Lochplatte 4 liegt. An ihrem in Richtung der (Zylinder-)Achse des Filterkorbs 34 betrachtet obersten Punkt 52a, 52b sind die Einhängestangen mit einem horizontal ausgerichteten Tragering 54 verschweisst.

Konkret sind in der gezeigten Ausführungsform die Einhängestangen 46a, 46b in einem Aufhängegestell 56 eingehängt. Dabei ist der hakenförmige, proximale Endbereich 48a, 48b der Einhängestangen in jeweils einer von vier Tragestangen des Aufhängegestells 56 eingehängt. (Von den vier Tragestangen sind nur zwei Tragestangen 58a, 58b gezeigt). Jede Tragestange 58a, 58b ist mit jeweils einem Balken 62a, 62b eines Aufhängekreuzes 60 befestigt ist. Das Aufhängekreuz 60 seinerseits ist über eine weitere, am Kreuzungspunkt 64 verbundene Verbindungsstange 66 mit einem Gewichtssensor 68 in Form einer Wägezelle verbunden, von der der gemessene Gewichtswert über einen Verstärker 70 an eine Datenerfassungseinheit 72 geleitet wird.

Wie insbesondere aus Fig. 2 ersichtlich ist, sind am Filterschlauch 10a in der an den Übergangsbereich 22 im Wesentlichen unmittelbar angrenzenden Region des distalen Bereichs 18 eine Anzahl von Aufhängmitteln 74 in Form von Riemen 74a angeordnet, von denen in Fig. 2 lediglich ein einzelner gezeigt ist. Besagte Riemen 74a ragen in die Reingaskammer 8 hinein und sind an ihrem reingaskammerseitigen (proximalen) Endbereich in Form einer Lasche 76 ausgebildet, die wiederum mit dem Tragering 54 des Filterkorbs 34 verbunden ist. Vorzugsweise sind die Riemen 74a dabei in Umlaufrichtung des Tragerings 54 gleichmässig verteilt angeordnet.

Mittels der Riemen 74a kann der Filterschlauch 10a derart angehoben werden, dass die Dichtringe 32', 32" entlastet werden, sodass im Wesentlichen das gesamte Gewicht des Filterschlauchs 10a auf dem Tragering 54 lastet, was durch den in Fig. 2 gezeigten Faltenwurf angedeutet ist.

Zudem kann der Filterkorb 34, auf dem der Tragering 54 abgestützt ist, mittels des Aufhängegestells 56 angehoben werden, sodass die proximalen Enden 50a, 50b der Einhängestangen nicht mehr auf der Lochplatte 4 aufliegen, sondern oberhalb derselbe zu liegen kommen, wodurch das gesamte Gewicht des Filterkorbes 34 mit dem Filterschlauch 10a an dem Aufhängegestell 56 lastet. Dies erlaubt es, dass im Wesentlichen das gesamte Gewicht des Filterelements 10a (mit dem darauf abgelagerten Filterkuchen) vom Gewichtssensor 68 erfasst werden kann.

Wie in Fig. 1 weiter gezeigt ist, weist die Filtervorrichtung 1 im Übrigen eine Druckluftdüse 78 mit einem daran über ein entsprechendes Blasrohr 80 angeschlossenen Drucklufttank (nicht gezeigt) auf.

Im Betrieb strömt nun das mit Feststoffpartikeln beladene Gas in den in der Rohgaskammer 6 liegenden Retentatraum 24. Von diesem durchströmt es das Filterelement 10 bzw. den Filterschlauch 10a in Richtung zum Permeatraum 26 hin, konkret in den Filterschlauchinnenraum 11 und anschliessend in die Reingaskammer 8.

Dabei werden auf der Aussenfläche 28 des Filterschlauchs 10a Feststoffpartikel unter Bildung eines Filterkuchens abgelagert, wobei mit zunehmender Dicke des Filterkuchens auch der Strömungswiderstand über den jeweiligen Filterschlauch 10a zunimmt.

Das mittels des Gewichtssensors 68 bestimmte Gewicht des Filterschlauches 10a mit dem darauf abgelagerten Filterkuchen erlaubt es, Rückschlüsse auf die Dicke des Filterkuchens bzw. dessen Strömungswiderstand zu tätigen. Letztendlich können die Gewichtswerte dazu verwendet werden, die Parameter für die Abreinigung des Filterelements, insbesondere den Zeitpunkt des Druckluftstosses und die Öffnungszeit der Druckluftdüse 78 einzustellen.

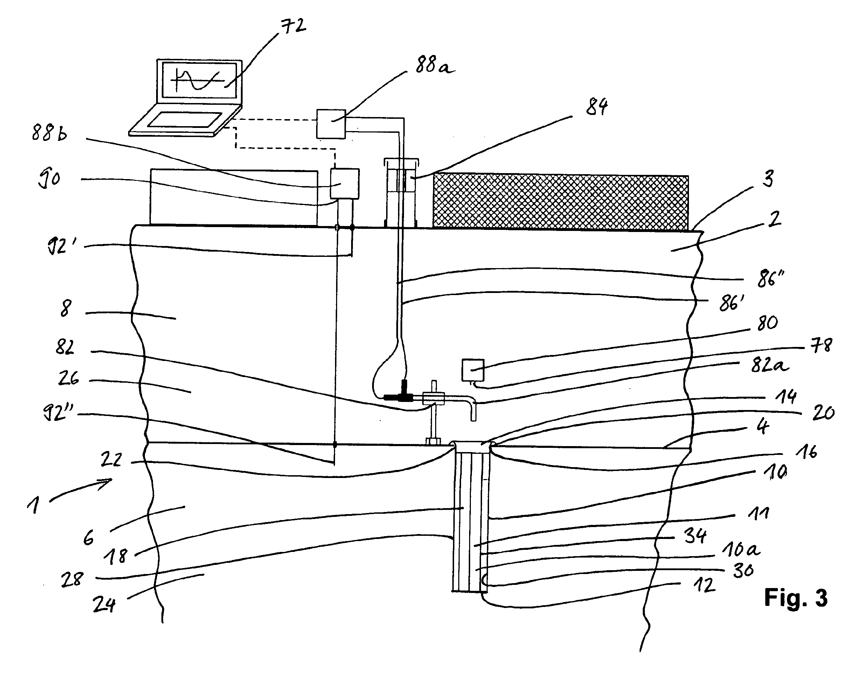

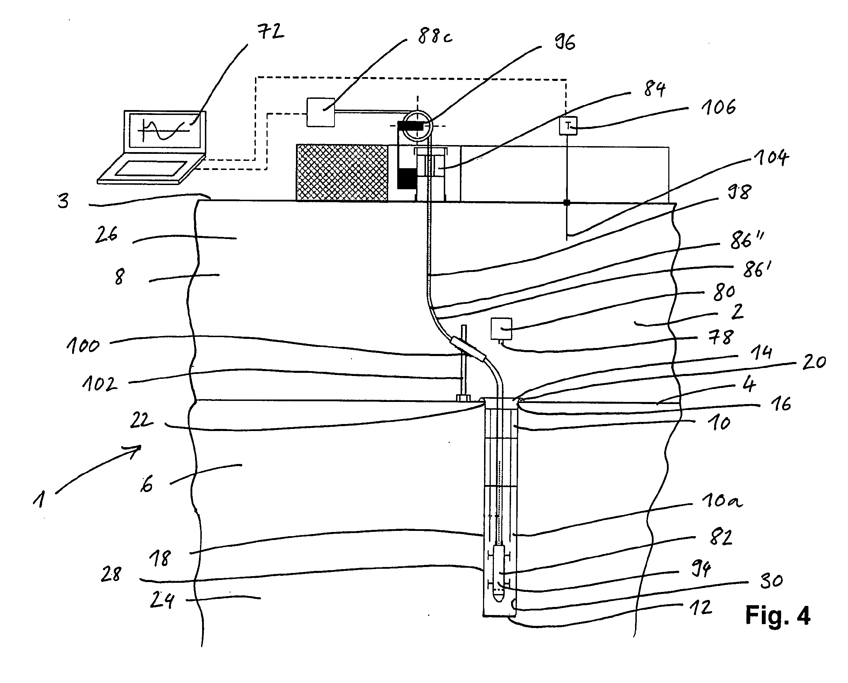

Weitere Ausführungsformen der Erfindung werden in den Fig. 3 und 4 gezeigt.

Die Ausführungsform gemäss Fig. 3 unterscheidet sind von derjenigen gemäss Fig. 1 in erster Linie dadurch, dass statt des Gewichtssensors 68 Mittel 82 zur Bestimmung der Geschwindigkeit des Gases beim Austritt aus dem Filterschlauchinnenraum 11 angeordnet sind. Diese Mittel umfassen ein in der Reingaskammer angeordnetes Prandtl- oder Pitotrohr 82a, welches über durch einen Dichtungszapfen 84 geführte Druckluftschläuche 86', 86" mit einem Drucktransmitter 88a verbunden sind, von welchem die gemessenen Gasgeschwindigkeitswerte zu einer Datenerfassungseinheit 72 geleitet werden.

Im Weiteren ist in der Ausführungsform gemäss Fig. 3 ein Differenzdruckmessgerät 90 umfassend einen in die Reingaskammer 8 und einen in die Rohgaskammer 6 ragenden Druckluftschlauch 92' bzw. 92", welche mit einem Drucktransmitter 88b verbunden sind, von dem der ermittelte Differenzdruck zwischen Rohgaskammer 6 und Reingaskammer 8 zur Datenerfassungseinheit 72 geleitet wird.

Die in Fig. 4 gezeigte Ausführungsform unterscheidet sich von derjenigen gemäss Fig. 3 in erster Linie dadurch, dass die Mittel 82 zur Bestimmung der nach dem Durchströmen des Filterelementes vorliegenden Geschwindigkeit des Gases in Form von einer relativ zur Höhe des Filterschlauchs verschiebbaren Gasgeschwindigkeitssonde 94 vorliegen.

Diese Gasgeschwindigkeitssonde 94 ist in Analogie zur Ausführungsform gemäss Fig. 3 über durch einen Dichtungszapfen 84 geführte Druckluftschläuche 86', 86" mit einem Drucktransmitter 88c verbunden, von welchem die gemessenen Gasgeschwindigkeitswerte zu einer Datenerfassungseinheit 72 geleitet werden. Die Gasgeschwindigkeitssonde 94 kann gemäss der in Fig. 4 gezeigten Ausführungsform dadurch verschoben werden, dass die Druckluftschläuche 86', 86" mittels eines ausserhalb des Filtervorrichtungsinnenraums 2 angeordneten Aufwicklers 96 auf- oder abgewickelt werden.

Zur Entlastung der Druckluftschläuche 86', 86" ist einerseits ein Draht 98 vorgesehen, der vom Aufwickler 96 durch die Rohgaskammer 8 bis zur Messsonde führt. Im Übrigen ist in der gezeigten Ausführungsform zur Führung der Druckluftschläuche ein Führungsrohr 100 vorgesehen, welches an einer an der Lochplatte 4 befestigten Befestigungsstange 102 fixiert ist.

Zusätzlich zu den in den Fig. 1 und 3 gezeigten Ausführungsformen weist die Ausführungsform gemäss Fig. 4 weiter einen Temperatursensoren 104 auf, der mit einem Thermoelement 106 verbunden ist, von dem die ermittelte Temperatur zur Datenerfassungseinheit 72 geleitet wird.

### Referenzzeichenliste

- 1: Filtervorrichtung
- 2: Filtervorrichtungsinnenraum
- 3: Filtervorrichungsgehäuse
- 4: Lochplatte
- 6: Rohgaskammer
- 8: Reingaskammer
- 10; 10a: Filterelement; Filterschlauch
- 11: Filterschlauchinnenraum
- 12: blindes Ende des Filterschlauchs
- 14: offenes Ende des Filterschlauchs
- 15: dem offenen Enden zugewandter Endbereich des Filterschlauchs
- 16: Loch der Lochplatte
- 18: distaler Bereich des Filterschlauchs
- 20: proximaler Bereich des Filterschlauchs
- 22: Übergangsbereich des Filterschlauchs
- 24: Retentatraum
- 26: Permeatraum
- 28: Aussenfläche des Filterelements
- 30: Innenfläche des Filterelements
- 32', 32": Dichtringe
- 34: Filterkorb
- 36: proximaler Bereich des Filterkorbes
- 38: distaler Bereich des Filterkorbes
- 40: Übergangsbereich des Filterkorbes
- 42: Ringstangen des Filterkorbs
- 44: Längsstangen
- 46a, 46b: Einhängestangen
- 48a, 48b: proximaler Endbereich der Einhängestangen
- 50a, 50b: proximales Ende der Einhängestangen
- 52a, 52b: oberster Punkt der Einhängestangen
- 54: Tragering
- 56: Aufhängegestell
- 58a, 58b: Tragestangen
- 60: Aufhängekreuz
- 62a, 62b: Balken des Aufhängekreuzes
- 64: Kreuzungspunkt des Aufhängekreuzes
- 66: Verbindungsstange
- 68: Gewichtssensor
- 70: Verstärker
- 72: Datenerfassungseinheit
- 74; 74a: Aufhängemittel; Riemen
- 76: Lasche
- 78: Druckluftdüse
- 80: Blasrohr
- 82; 82a: Mittel zur Bestimmung der Gasgeschwindigkeit; Prandtl-/Pitotrohr
- 84: Dichtungszapfen
- 86', 86 ": Druckluftschläuche
- 88a-c: Drucktransmitter
- 90: Differenzdruckmessgerät
- 92', 92 ": Druckluftschläuche
- 94: Gasgeschwindigkeitssonde
- 96: Aufwickler
- 98: Draht
- 100: Führungsrohr
- 102: Befestigungsstange
- 104: Temperatursensor
- 106: Thermoelement

## Patentansprüche

1. Filtervorrichtung zur Abscheidung von Feststoffpartikeln aus einem mit den Feststoffpartikeln beladenen Gas umfassend
ein einen Filtervorrichtungsinnenraum (2) umschliessendes Filtervorrichtungsgehäuse (3),
eine im Filtervorrichtungsinnenraum (2) angeordnete Lochplatte (4), und
eine Vielzahl an Filterelementen (10), von denen jedes einem Loch (16) der Lochplatte (4) zugeordnet ist und die zusammen mit der Lochplatte (4) den Filtervorrichtungsinnenraum (2) in einen Retentatraum (24) und einen Permeatraum (26) unterteilen, jedes Filterelement (10) eine dem Retentatraum (24) zugewandte Aussenfläche (28) und eine dem Permeatraum (26) zugewandte Innenfläche (30) aufweist und dazu bestimmt ist, vom Gas vom Retentatraum (24) her zum Permeatraum (26) hin durchströmt zu werden, so dass auf der Aussenfläche (28) Feststoffpartikel unter Bildung eines Filterkuchens abgelagert werden,
**dadurch gekennzeichnet, dass** mindestens einem Teil der Filterelemente (10)
a) ein Gewichtssensor (68) zur Bestimmung des Gewichts des jeweiligen Filterelements (10) oder eines Bereichs davon mit dem darauf abgelagerten Filterkuchen und/oder
b) Mittel (82) zur Bestimmung der nach dem Durchströmen des jeweiligen Filterelements (10) vorliegenden Geschwindigkeit des Gases zugeordnet ist/sind.

2. Filtervorrichtung gemäss Anspruch 1, **dadurch gekennzeichnet, dass** die Lochplatte (4) im Betrieb in einer im Wesentlichen horizontal verlaufenden und in Strömungsrichtung des Gases betrachtet zwischen einer stromaufwärts gelegenen Rohgaskammer (6) und einer stromabwärts gelegenen Reingaskammer (8) angeordneten Ebene liegt, und mindestens ein Teil der Filterelemente (10) in Form eines in die Rohgaskammer (6) hineinragenden Filterschlauches (10a) ausgebildet ist, welcher einen Filterschlauchinnenraum (11) definiert und ein in der Rohgaskammer (6) angeordnetes blindes Ende (12) und ein in die Reingaskammer (8) mündendes offenes Ende (14) aufweist.

3. Filtervorrichtung gemäss Anspruch 2, **dadurch gekennzeichnet, dass** das jeweilige Filterelement (10) mit dem Gewichtssensor (68) mittels Aufhängemitteln (74) verbunden ist, die an einem dem offenen Ende (14) zugewandten Endbereich (15) des Filterschlauchs (10a) befestigt sind.

4. Filtervorrichtung gemäss einem der Ansprüche 2 und 3, **dadurch gekennzeichnet, dass** die Mittel (82) zur Messung der nach dem Durchströmen des Filterelements (10; 10a) vorliegenden Geschwindigkeit des Gases im Filterschlauchinnenraum (11) angeordnet sind.

5. Filtervorrichtung gemäss Anspruch 4, **dadurch gekennzeichnet, dass** die Mittel (82) im Filterschlauchinnenraum (11) relativ zur Höhe des Filterschlauchs (10a) verschiebbar sind.

6. Verfahren zur Überprüfung eines Filterelements (10) einer Filtervorrichtung (1) gemäss einem der vorhergehenden Ansprüche, in der das Filterelement (10) vom Gas vom Retentatraum (24) her zum Permeatraum (26) hin durchströmt wird, wobei auf der dem Retentatraum (24) zugewandten Aussenfläche (28) des Filterelementes (10) Feststoffpartikel unter Bildung des Filterkuchens ablagert werden, **dadurch gekennzeichnet, dass** für mindestens einen Teil der Filterelemente
a) das Gewicht des jeweiligen Filterelements (10) oder eines Bereichs davon mit dem darauf abgelagerten Filterkuchen bestimmt wird und/oder
b) die nach dem Durchströmen durch das Filterelement (10) vorliegende Geschwindigkeit des Gases bestimmt wird.

7. Verfahren gemäss Anspruch 6, **dadurch gekennzeichnet, dass** mindestens das Gewicht desjenigen Bereichs des Filterelements (10) bestimmt wird, der vom Gas durchströmt wird.

8. Verfahren gemäss einem der Ansprüche 6 oder 7, **dadurch gekennzeichnet, dass** die unmittelbar beim Austritt an der Innenfläche (30) des Filterelements (10) vorliegende Geschwindigkeit des Gases bestimmt wird.

9. Verfahren gemäss einem der Ansprüche 6 bis 8, **dadurch gekennzeichnet, dass** die Geschwindigkeit des Gases an unterschiedlichen Stellen bestimmt wird.

10. Verfahren gemäss einem der Ansprüche 6 bis 9, **dadurch gekennzeichnet, dass** die Bestimmung des Gewichts und/oder der Geschwindigkeit des Gases kontinuierlich erfolgt.

11. Verfahren zur Abreinigung eines Filterelements unter Verwendung des Verfahrens gemäss einem der vorhergehenden Ansprüche umfassend den zusätzlichen Schritt, dass die Filterelemente (10) in Abhängigkeit des gemessenen Gewichts und/oder der gemessenen Geschwindigkeit des Gases abgereinigt werden.

12. Verfahren gemäss Anspruch 11, **dadurch gekennzeichnet, dass** die Abreinigung mittels auf die Innenfläche (30) des Filterelements (10) aufgebrachter Druckgasimpulse erfolgt.

13. Verwendung der Filtervorrichtung (1) gemäss einem der Ansprüche 1 bis 5 beziehungsweise des Verfahrens gemäss einem der Ansprüche 6 bis 12 in einer Müllverbrennungsanlage.

14. Filterschlauch für eine Filtervorrichtung gemäss einem der Ansprüche 2 bis 5, welcher einen einem blinden Ende (12) zugewandten distalen Bereich (18) umfasst, der dazu bestimmt ist, im Betrieb in der Rohgaskammer angeordnet zu sein, einen dem dem blinden Ende (12) gegenüberliegend angeordneten offenen Ende (14) zugewandten proximalen Bereich (20), der dazu bestimmt ist, im Betrieb in die Reingaskammer zu münden, und einen zwischen dem distalen Bereich (18) und dem proximalen Bereich (20) angeordneten Übergangsbereich (22), der die Lochplatte (4) durchgreift, **dadurch gekennzeichnet, dass** der Filterschlauch (10) Aufhängemittel (74) aufweist, die an einem dem offenen Ende (14) zugewandten Endbereich (15) des Filterschlauchs befestigt sind.

15. Filterschlauch gemäss Anspruch 14, **dadurch gekennzeichnet, dass** die Aufhängemittel (74) in einer an den Übergangsbereich (22) im Wesentlichen unmittelbar angrenzenden Region des distalen Bereichs (18) befestigt sind.
